# EUROPÄISCHE PATENTSCHRIFT

(11) **EP 0 627 822 B1**
(45) Veröffentlichungstag und Bekanntmachung des Hinweises auf die Patenterteilung: **28.04.1999**
(21) Anmeldenummer: 94107679.6
(22) Anmeldetag: 18.05.1994
(51) Int. Cl.: H04B 1/10

(54) **Uhrenradio mit räumlich abgesetztem Funkuhrempfänger**
Clock radio with remote radio clock receiver
Récepteur radio commandé par une horloge et muni d'une montre réceptrice délocalisée

(30) Priorität: 02.06.1993 DE 4318291
(43) Veröffentlichungstag der Anmeldung: 07.12.1994
(73) Patentinhaber: GRUNDIG Aktiengesellschaft, 90762 Fürth (DE)
(72) Erfinder: Lichius, Manfred, Grundig Aktiengesellschaft, D-90762 Fürth (DE); Bock, Theo, Grundig Aktiengesellschaft, D-90762 Fürth (DE)

(56) Entgegenhaltungen:
- EP-A- 0 180 155
- US-A- 4 426 736
- PATENT ABSTRACTS OF JAPAN vol. 8, no. 200 (E-266) 13. September 1984 & JP-A-59 089 004 (MATSUSHITA)

## Beschreibung

Die Erfindung betrifft einen mit einer Funkuhr ausgestatteten Rundfunkempfänger mit Weckfunktion.

Gemäß dem Stand der Technik sind Uhrenradios bekannt, die mit Hilfe einer eingebauten Schaltuhr zu voreinstellbaren Zeiten Weck- oder Alarmsignale abgeben oder zum sanften Aufwecken des Gerätebenutzers den Rundfunkempfänger einschalten. Diese Geräte sind zumeist mit beleuchteten oder selbstleuchteten alphanumerischen Displays ausgerüstet, die auch bei Nacht ein Erkennen der Uhrzeit ohne Raumbeleuchtung erlauben. Häufig werden zu diesem Zweck Leuchtdioden- oder Fluoreszenzanzeigen verwendet, deren einzelne Segmente im Zeitmultiplexbetrieb angesteuert werden.

Ebenfalls bekannt sind Funkuhren, die von einem zentralen Normalzeitsender in regelmäßigen Zeitabständen mit Hilfe der im Langwellenbereich ausgesendeten Zeitinformationen synchronisiert werden.

Es liegt deshalb nahe, ein Uhrenradio mit einer funkgesteuerten Uhr auszustatten, da hierdurch nicht nur die Notwendigkeit einer gelegentlichen Korrektur der auch bei Quartzuhren auftretenden Zeitabweichung entfällt, sondern auch die Umsteuerung zwischen Sommer- und Winterzeit automatisch erfolgt.

Bei der Realisierung der vorbeschriebenen Gerätekombination ergeben sich jedoch erhebliche Probleme durch Störeinstrahlungen aus Netztransformator und Uhrendisplay in die zum Empfang der Zeitinformationen verwendete Ferritantenne. Es war deshalb Aufgabe der vorliegenden Erfindung, eine Geräteanordnung zu schaffen, bei der ohne aufwendige Abschirmmaßnahmen ein ungestörter Empfang der vom Langwellensender empfangenen Zeitsignale gewährleistet ist.

Diese Aufgabe wird durch die im Anspruch 1 genannten Merkmale gelöst. Vorteilhafte Ausgestaltungen der Erfindung sind in den Ansprüchen 2 bis 4 offenbart.

Der Vorteil der im Anspruch 1 beschriebenen Anordnung liegt in dem geringen gerätetechnischen Aufwand durch die räumliche Trennung des Funkuhrempfängers inklusiv Ferritantenne von dem u.a. mit Netzteil und Uhrendisplay versehenen Basisgerät.

Die Anordnung nach Anspruch 2 stellt in vorteilhafter Weise eine sehr kompakte Einheit aus Funkuhrempfänger und Ferritantenne dar, wobei letztere bei herabhängender Wurfantenne automatisch waagrecht ausgerichtet ist.

Die Anordnung nach Anspruch 3 hat den Vorteil, daß die zur Signalübertragung und Stromversorgung des Funkuhrempfängers dienende Leitung gleichzeitig als UKW-Antenne für den im Basisgerät vorhandenen Rundfunkempfänger verwendet wird.

Mit der Schaltungsanordnung nach Anspruch 4 wird in vorteilhafter Weise ein merklicher Energieverlust am Antenneneingang des im Basisgerät vorhandenen Rundfunkempfängers vermieden.

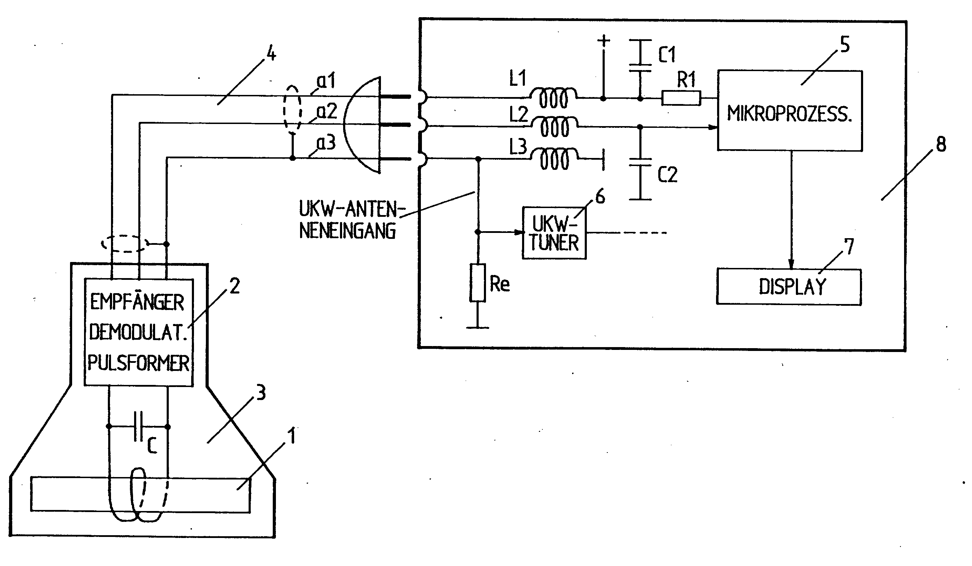

Die Erfindung wird nachstehend anhand der Zeichnung erläutert. Die einzige Figur zeigt in vereinfachter Darstellung die wesentlichen Komponenten des mit einer Funkuhr versehenen Rundfunkempfängers.

Erfindungsgemäß besteht das Uhrenradio aus dem Basisgerät 8, einer steckbaren Wurfantenne 4 und der damit verbundenen Funkuhr-Empfangseinheit 3.

Das Basisgerät 8 beinhaltet einen mit dem UKW-Tuner 6 angedeuteten Rundfunkempfänger, einen Mikroprozessor 5, der u.a. als gesteuerter Uhrenbaustein verwendet wird, ein Uhrendisplay 7 in Form eines im Multiplexbetrieb arbeitenden, selbstleuchtenden Anzeigebausteins und ein nicht dargestelltes Netzteil zur Stromversorgung des Gesamtgerätes. Die Wurfantenne 4 ist an einem Ende mit einem Stecker zum Anschluß an das Basisgerät 8 versehen und am entgegengesetzten Ende fest mit der Funkuhr-Empfangseinheit 3 verbunden. Sie besteht aus einer zweiadrig abgeschirmten Leitung und dient der Stromzuführung zum Empfangsteil 2 über die Ader a1, der Zeitsignal-Übertragung vom Empfangsteil 2 zum Basisgerät 8 über die Ader a2 und als UKW-Antenne zur Ansteuerung des UKW-Tuners 6 im Basisgerät 2 durch Ausnutzung der Abschirmung a3. Zur Erzielung optimaler Hochfrequenzeigenschaften für den UKW-Empfang beträgt die Leitungslänge der Wurfantenne 4 ein Viertel der Wellenlänge im UKW-Bereich. Die Funkuhr-Empfangseinheit 3 umfaßt die Ferritantenne 1, die zusammen mit dem Kondensator C einen Schwingkreis für die Sendefrequenz von beispielsweise 77,5 kHz des deutschen Normalzeitsenders DCF 77 bildet, und das Empfangsteil 2, das sich aus einem fest abgestimmten Langwellentuner, einem Demodulator und einem Pulsformer zur Aufbereitung der demodulierten Zeitsignale zusammensetzt. Die Ferritantenne 1 und das Empfangsteil 2 sind zu einer kompakten Einheit 3 so vereinigt, daß bei herabhängender Wurfantenne 4 der Ferritstab eine waagrechte Lage einnimmt. Die geräteseitigen Steckanschlüsse der Wurfantenne 4 sind im Basisgerät 8 hochfrequenzmäßig über die Induktivitäten L1 bis L3 abgeblockt, um das UKW-Antennensignal für den Tuner 6 nicht merklich zu bedämpfen. Die Induktivität der Spulen L1 bis L3 beträgt beispielsweise jeweils 2,2 µH, so daß die für die Bedämpfung des UKW-Antennensignals zu betrachtende hochfrequenzmäßige Parallelschaltung der Spulen L1 bis L3 bei einer Frequenz von 100 MHz eine Gesamtreaktanz von ca. 460 Ohm ergibt, welche ausreichend groß gegenüber der Eingangsimpedanz Re = 60 Ohm des Tuners 1 ist.

Über den Hochpaß L2, C2 werden hochfrequente Störsignale aus den Zeitsignalen herausgesiebt. Das Siebglied R1, C1 sorgt dafür, daß Prozessorzeittaktstörungen von der Spannungsversorgung des Funkuhr-Empfangsteils 2 ferngehalten werden.

## Patentansprüche

1. Rundfunkempfänger mit eingebauter Funkuhr zur Steuerung verschiedener Weck-, Alarm- oder Schaltfunktionen, wobei die Empfangseinheit (3) der Funkuhr von den übrigen Baugruppen räumlich getrennt ist,
**dadurch gekennzeichnet**, daß die Empfangseinheit (3), welche zum Empfang der im Langwellenbereich ausgestrahlten Zeitinformationen benutzt wird, am gerätefernen Ende einer für den UKW-Empfang des Rundfunkempfängers (6) vorgesehenen Wurfantenne (4) angeordnet ist, daß sich die Wurfantenne (4) aus mindestens einer Leitung (a1, a2) und einer zugehörigen Abschirmung (a3) zusammensetzt und daß die Abschirmung (a3) gleichzeitig als Antenne für den UKW-Empfang des Rundfunkempfängers benutzt wird.

2. Rundfunkempfänger nach Anspruch 1,
**dadurch gekennzeichnet**, daß die Empfangseinheit (3) aus einem Empfangsteil (2) und einer Ferritantenne (1) besteht und diese eine kompakte Einheit bilden, daß das Empfangsteil (2) einen auf die Sendefrequenz des Normalzeitsenders abgestimmten Empfänger, einen Demodulator und einen Pulsformer enthält und daß die Ferritantenne im Winkel von 90 Grad zur Wurfantenne (4) angeordnet ist.

3. Rundfunkempfänger nach Anspruch 1 bis 2,
**dadurch gekennzeichnet**, daß die aus mindestens einer Leitung (a₁, a₂) bestehende Wurfantenne (4) eine zweiadrige abgeschirmte Leitung ist, deren Länge einem Viertel der für den UKW-Rundfunk benutzten Wellenlänge entspricht, und daß eine (a₁) der Innenadern dieser abgeschirmten Leitung für die Spannungsversorgung des Empfangsteils (2) und die andere (a₂) der Innenadern zur Übertragung der Zeitinformation verwendet werden.

4. Rundfunkempfänger nach Anspruch 1 bis 3,
**dadurch gekennzeichnet**, daß empfängerseitig eine Parallelschaltung von Drosselspulen (L₁-L₃) zur hochfrequenten Abblockung vorgesehen ist und daß die Reaktanz dieser Parallelschaltung hochohmig gegenüber dem Fußpunktwiderstand (Re) des UKW-Antenneneingangs ist.

## Claims

1. Radio receiver with built-in radio clock for controlling various wake-up, alarm or switching functions, the receiving unit (3) of the radio clock being spatially separated from the other modules, characterized in that the receiving unit (3) which is used to receive the items of time information broadcast in the long wave range is disposed at the appliance-remote end of a throw-out aerial (4) provided for the VHF reception of the radio receiver (6), in that the throw-out aerial (4) is made up of at least one line (al, a2) and an associated screen (a3) and in that the screen (a3) is used at the same time as the aerial for the VHF reception of the radio receiver.

2. Radio receiver according to Claim 1, characterized in that the receiving unit (3) comprises a receiving section (2) and a ferrite aerial (1) and these form a compact unit, in that the receiving section (2) contains a receiver tuned to the transmission frequency of the standard time transmitter, a demodulator and a pulse shaper, and in that the ferrite aerial is disposed at an angle of 90 degrees to the throw-out aerial (4).

3. Radio receiver according to Claims 1 to 2, characterized in that the throw-out aerial (4) comprising at least one line (al, a2) is a two-core screened line whose length is equal to one quarter of the wavelength used for the VHF radio broadcasting, and in that one (al) of the internal cores of said screened line is used to supply power to the receiving section (2) and the other (a2) internal core is used to transmit the time information.

4. Radio receiver according to Claims 1 to 3, characterized in that a parallel circuit of choke coils (L₁-L₃) is provided at the receiving end for high-frequency decoupling and in that the reactance of said parallel circuit is of high impedance compared with the bottom-end impedance (Re) of the VHF aerial input.

## Revendications

1. Récepteur de radiodiffusion muni d'une horloge de radio incorporée pour commander des fonctions différentes de réveil, d'alarme ou de commutation, dans lequel l'unité (3) réceptrice de l'horloge de radio est séparée des autres blocs d'éléments,
**caractérisée en ce que** l'unité réceptrice (3) utilisée pour recevoir les informations de temps diffusées dans la gamme des grandes ondes est disposée à l'extrémité éloignée de l'appareil d'une antenne volante (4) prévue pour la réception à ondes ultracourtes du récepteur (6) de radiodiffusion, en ce que l'antenne volante (4) se compose d'au moins une ligne (a1, a2) et d'un blindage (a3) qui lui est associé, et en ce que le blindage (a3) est utilisé en même temps comme antenne pour la réception en ondes ultracourtes du récepteur de radiodiffusion.

2. Récepteur de radiodiffusion selon la revendication 1,
**caractérisée en ce que** l'unité réceptrice (3) comprend une partie réceptrice (2) et une antenne en ferrite (1) et celles-ci forment un ensemble compact, en ce que la partie réceptrice (2) comporte un récepteur accordé sur la fréquence émise par l'émetteur d'heure légale, un démodulateur et un dispositif ou circuit de formation d'impulsions et en ce que l'antenne ferrite est disposée selon un angle de 90 degrés par rapport à l'antenne volante (4).

3. Récepteur de radiodiffusion selon les revendications 1 à 2,
**caractérisée en ce que** l'antenne volante (4) comprenant au moins une ligne (a1, a2) est une ligne blindée à deux brins dont la longueur correspond à un quart de la longueur d'onde utilisée pour la radiodiffusion en ondes ultracourtes, et en ce que l'un (a1) des brins intérieurs de cette ligne blindée est utilisé pour l'alimentation en tension de la partie réceptrice (2) et l'autre (a2) des brins intérieurs, pour la transmission des informations de temps.

4. Récepteur de radiodiffusion selon les revendications 1 à 3,
**caractérisé en ce que** sur le côté du récepteur est prévu un montage en parallèle de bobines d'inductance (L1 à L3) pour le blocage à haute fréquence, et en ce que la réactance de ce montage en parallèle a une valeur ohmique élevée par rapport à l'impédance de base (Re) de l'entrée d'antenne à ondes ultracourtes.
